# EUROPÄISCHE PATENTSCHRIFT

(11) **EP 2 185 264 B1**
(45) Veröffentlichungstag und Bekanntmachung des Hinweises auf die Patenterteilung: **09.10.2013**
(21) Anmeldenummer: 08785450.1
(22) Anmeldetag: 08.08.2008
(51) Int. Cl.: D03D 9/00, B01D 39/08, D03D 1/00, D03D 15/00

(54) **Filtergewebe für ein Brauereimaischefilter**
Filter cloth for a wort brewery filter
Tissu filtrant pour un filtre à moût de brassage

(30) Priorität: 31.08.2007 DE 102007041412
(43) Veröffentlichungstag der Anmeldung: 19.05.2010
(73) Patentinhaber: Bloch, Klaus, 53757 Sankt Augustin (DE)
(72) Erfinder: Bloch, Klaus, 53757 Sankt Augustin (DE)
(74) Vertreter: Wagner, Matthias
(86) Internationale Anmeldenummer: PCT/EP2008/006547
(87) Internationale Veröffentlichungsnummer: WO 2009/030337

(56) Entgegenhaltungen:
- EP-A- 1 837 064
- WO-A-2004/044313
- IE-A1- 20 050 665
- JP-A- 2001 314 713
- US-A1- 2004 132 373

## Beschreibung

Die Erfindung betrifft ein Filtergewebe für ein Brauereimaischefilter, gebildet aus Kett- und Schussfäden auf Basis von Kunststoffmonofilen mit einem Durchmesser von 0,25 bis 0,45 mm sowie in Kett- und/oder Schussrichtung in definierten Abständen eingearbeiteten weiteren Fasern.

Bei der Herstellung von Brauereierzeugnissen, wie Bier werden zur Filtration der Maische Filtriereinrichtungen eingesetzt, die ein Maischefilter, gebildet aus einem Gewebe aus Kett- und Schussfäden auf Basis von Kunststoffmonofilen aufweisen. Üblicherweise weisen diese Kunststoffmonofile einen Durchmesser von 0,25 bis 0,45 mm auf, um im Gewebe die für die Filtrationswirkung gewünschte Porosität zu erzeugen.

Da beim Einsatz derartiger Filtergewebe in einer Brauerei lebensmittelrechtliche Anforderungen zu berücksichtigen sind, bestehen die üblicherweise eingesetzten Brauereimaischefilter aus Filtergeweben auf Basis von Polypropylenmonofilen, da Polypropylen die erforderlichen lebensmittelrechtlichen Zulassungen erfüllt.

Ein solches Polypropylen-Filtertuch ist beispielsweise aus der DE 1 947 119 U1 bekannt.

Hierbei tritt jedoch das Problem auf, dass die Brauereimaischefilter lediglich randseitig in einem Halterahmen eingespannt und während des Filtrationsvorganges mit Wasser hohen Drucks und hoher Temperatur beaufschlagt werden.

Auch nach dem Abschluss des Filtrationsvorganges kommt Wasser mit hohem Druck und hoher Temperatur zum Einsatz, wenn das Maischefilter von den zurückgehaltenen Maischepartikeln gereinigt und für den nächsten Einsatz vorbereitet wird. Bei diesen Bedingungen neigen die eingesetzten Polypropylenmonofilgewebe dazu, sich dauerhaft zu dehnen, so dass das Filtergewebe bereits nach kurzer Nutzungsdauer ausbeult, was außerordentlich unerwünscht ist. Ein ausgebeultes Filtergewebe verändert seine für die Filtrationswirkung gewünschte Maschenweite und lässt sich darüber hinaus nur mit großen Schwierigkeiten wieder von zurückgehaltenem Material abreinigen.

Aus der DE 29 36 633 A1 ist ein gattungsfremdes Drucktuch für Siebdruckmaschinen bekannt, welches aus einem Textilgewebe mit Kett- und Schussfäden auf Basis von Kunststoffmonofilen gebildet ist. In definierten Abständen sind Verstärkungsfasern aus einem gegenüber dem Kett- und Schussfäden verstärkten Kunststoff parallel zu diesen in das Gewebe eingearbeitet.

Aus der IE 2005/0665 ist ein Filtertuch für Tiefbettfilter bekannt, welches ein aus Monofilamenten und/oder Multifilamenten gebildetes Gewebe umfasst, in welches Drähte aus Metall oder synthetischem Material eingearbeitet sind. Ein derartiges Filtertuch ist als Brauereimaischefilter ungeeignet, da dieses beim Filtervorgang und anschließendem Reinigen einer Biege-Wechsellast unterworfen wird, welches die Drähte binnen kurzer Zeit brechen lässt.

Es ist daher Aufgabe der Erfindung, ein Brauereimaischefilter der eingangs genannten Art vorzuschlagen, welches zuverlässig das Ausbeulen im Betrieb verhindert und somit zu einer verbesserten Filtrationswirkung und verlängerter Lebensdauer bei vertretbaren Kosten führt.

Zur Lösung der erfindungsgemäßen Aufgabe wird vorgeschlagen, dass die weiteren Fasern als Verstärkungsfasern aus einem gegenüber den die Kett- und Schussfäden des Filtergewebes bildenden Kunststoffmonofilen reißfesteren und dehnungsärmeren Kunststoff gebildet sind und parallel zu den Kett- und Schussfäden in das Filtergewebe eingearbeitet sind und eine Bruchdehnung von maximal 6 % aufweisen.

Die erfindungsgemäß zusätzlich vorgesehenen weiteren Verstärkungsfasern beeinträchtigen das aus den Kett- und Schussfäden gebildete Filtergewebe hinsichtlich seiner Maschenweite und der daraus resultierenden Filterwirkung nicht, sie verhindern jedoch aufgrund ihrer Reißfestigkeit und geringeren Dehnung zuverlässig das Ausbeulen des ansonsten im Betrieb zu Längendehnungen neigenden Filtergewebes. Auf diese Weise kann die Filterwirkung und Lebensdauer des Filtergewebes auf überraschend einfache Weise beträchtlich erhöht werden.

Nach einem Vorschlag der Erfindung sind die Verstärkungsfasern in gleichen Abständen voneinander in das Filtergewebe eingearbeitet, wobei Abstände von 1 bis 10 cm, vorzugsweise 5 cm voneinander als geeignet angesehen werden.

Die Verstärkungsfasern können aus verschiedenen geeigneten Kunststoffen gefertigt werden. Aufgrund der extremen Reißfestigkeit und geringen Bruchdehnung und darüber hinaus vorhandener lebensmittelrechtlicher Zulassung ist nach einem Vorschlag der Erfindung vorgesehen, die Verstärkungsfasern aus einem ultrahochmolekularen Polyethylen herzustellen. Fasern aus derartigem ultrahochmolekularem Polyethylen werden beispielsweise von der Firma DSM unter dem Markennamen "Dyneema®" angeboten.

Bevorzugt weisen diese Verstärkungsfasern eine Faserstärke von 2.500 bis 3.000 dtex, vorzugsweise 2.800 bis 2.900 dtex auf. Eine Dyneema®-Faser von 2.840 dtex Stärke besitzt eine Zugfestigkeit von 700 N bei nur 3 bis 4% Bruchdehnung und ist somit in der Lage, selbst bei Abständen von 5 cm voneinander in Kett- und Schussrichtung das Filtergewebe so zu verstärken, dass Ausbeulungen praktisch nicht mehr vorkommen. Gleichzeitig wird der Mehraufwand durch das Einarbeiten der zusätzlichen Verstärkungsfasern aufgrund des großen Abstandes derselben voneinander in vertretbaren Grenzen gehalten.

Selbstverständlich können im Rahmen der Erfindung auch andere Rohstoffe zur Ausbildung der Verstärkungsfasern in Betracht kommen, beispielsweise Aramid-Fasern, wie Kevlar® oder PBO-Fasern.

Die Kett- und Schussfäden werden bevorzugt aus Polypropylenmonofilen gefertigt, können aber z.B. auch aus Polyethylen oder anderen geeigneten Kunststoffen gefertigt sein.

Nach weiterem Vorschlag der Erfindung wird das Filtergewebe aus 20 bis 40 Kettfäden/cm und 5 bis 16 Schussfäden/cm gebildet und weist eine Bindung auf, die das Gewebe auf seinen beiden Seiten gleich erscheinen lässt. Geeignete Bindungsarten sind beispielsweise Köper 2/2, Köper 3/1, Köper 2/1, Kreuzköper, Atlas oder Leinwand.

Zur Befestigung in einem Halterahmen kann das Filtergewebe randseitig mit einem Keder oder einer ähnlichen umlaufenden Gummilippe vorgesehen sein und darüber hinaus nach dem Weben und Einarbeiten der Verstärkungsfasern mittels Druck und Wärme kalandriert werden, um eine Vorverbindung der Kett- und Schussfäden im Kreuzungsbereich sowie eine Abflachung des Monofilquerschnittes unter gleichzeitiger Verringerung und Festlegung der endgültigen Maschenweite zu bewirken.

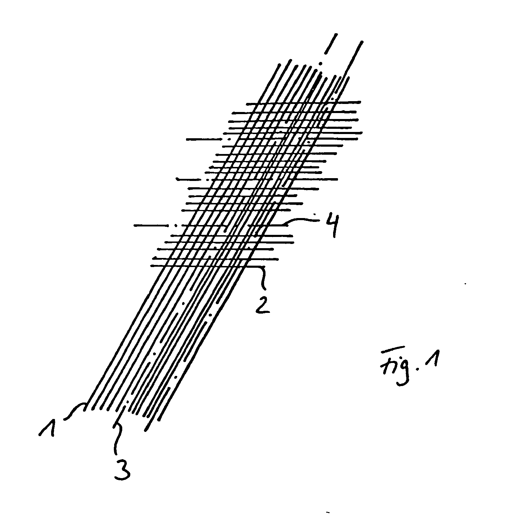

Weitere Ausgestaltungen und Einzelheiten der Erfindung werden nachfolgen anhand eines aus der Zeichnung ersichtlichen Ausführungsbeispieles erläutert.

Die einzige Figur zeigt in grob schematisierter ausschnittsweiser Darstellung ein Filtergewebe für ein Brauereimaischefilter, gebildet aus Kettfäden 1 und Schussfäden 2, die jeweils aus einem Polypropylenmonofil, vorzugsweise mit thermostabiler Ausrüstung und einem Einzeldurchmesser von 0,35 mm gebildet sind.

Die Kett- und Schussfäden sind mit einer Köper 2/2-Bindung zu einem auf beiden Seiten gleichförmigen Gewebe verwoben, wobei in Kettrichtung 27 Fäden/cm und in Schussrichtung 10 Fäden/cm angeordnet sind.

Zusätzlich zu den das Grundgewebe bildenden Kett- und Schussfäden 1, 2 sind in definierten Abständen, hier exakt alle 5 cm Verstärkungsfasern aus einem ultrahochmolekularen Polyethylen (Dyneema®) mit einer Faserstärke von 2.840 dtex und einer daraus resultierenden Zugfestigkeit von ca. 700 N bei 3 bis 4% Bruchdehnung mit in das Gewebe eingearbeitet, d.h. entsprechend der vorliegenden Bindung, hier Köper 2/2, im Gewebe verwoben.

Demzufolge ist in Kettrichtung jeder 135. Faden aus einer Verstärkungsfaser 3 gebildet, während in Schussrichtung jeder 50. Faden aus einer Verstärkungsfaser 4 gebildet ist, wobei die Verstärkungsfasern 3 parallel zu den Kettfäden 1 und die Verstärkungsfasern 4 parallel zu den Schussfäden 2 verlaufen. Durch diese Anordnung ergibt sich die gewünschte Beabstandung der Verstärkungsfasern in Kett- bzw. Schussrichtung voneinander zur den gewünschten jeweils 5 cm.

Die die Kett- und Schussfäden 1, 2 bildenden Polypropylenmonofile können durch Einarbeitung eines Hitzestabilisators thermostabil ausgerüstet werden.

Nachdem das solchermaßen gebildete Gewebe gewebt worden ist, wird dieses einem Kalander, beispielsweise einem Dreiwalzenkalander zugeführt und unter Einwirkung von Druck und Wärme kalandriert, wodurch eine Verbindung der Kett- und Schussfäden in den Kreuzungspunkten bewirkt wird, soweit es sich bei den Kett- und Schussfäden um die Polypropylenmonofilamente handelt und darüber hinaus die ursprünglich einen kreisförmigen Querschnitt aufweisenden Polypropylenmonofilamente einen ovalen Querschnitt erhalten, der die Maschenweite des Gewebes auf das gewünschte Maß verringert.

Das solchermaßen hergestellte Filtergewebe eignet sich für vielfältige Anwendungen, insbesondere als Brauereimaischefilter und zeigt dort überlegene Standfestigkeit und Filterwirkung sowie geringste Dehnung.

## Patentansprüche

1. Filtergewebe für ein Brauereimaischefilter, gebildet aus Kett- und Schussfäden (1, 2) auf Basis von Kunststoffmonofilen mit einem Durchmesser von 0,25 bis 0,45 mm sowie in Kett- und/oder Schussrichtung in definierten Abständen eingearbeiteten weiteren Fasern (3, 4), wobei die weiteren Fasern (3, 4) als Verstärkungsfasern aus einem gegenüber den Kunststoffmonofilen für die Kett- und Schussfäden (1, 2) reißfesteren und dehnungsärmeren Kunststoff parallel zu den Kett- bzw. Schussfäden (1, 2) in das Filtergewebe eingearbeitet sind **dadurch gekennzeichnet, dass** die Verstärkungsfasern (3, 4) eine Bruchdehnung von maximal 6% aufweisen.

2. Filtergewebe nach Anspruch 1, **dadurch gekennzeichnet, dass** die Verstärkungsfasern (3, 4) in gleichen Abständen voneinander in das Filtergewebe eingearbeitet sind.

3. Filtergewebe nach einem der Ansprüche 1 oder 2, **dadurch gekennzeichnet, dass** die Verstärkungsfasern (3, 4) einen Abstand von 1 bis 10 cm, vorzugsweise 5 cm voneinander aufweisen.

4. Filtergewebe nach einem der Ansprüche 1 bis 3, **dadurch gekennzeichnet, dass** die Verstärkungsfasern (3, 4) aus einem ultrahochmolekularen Polyethylen hergestellt sind.

5. Filtergewebe nach Anspruch 4, **dadurch gekennzeichnet, dass** die Verstärkungsfasern (3, 4) eine Faserstärke von 2.500 bis 3.000 dtex, vorzugsweise 2.800 bis 2.900 dtex aufweisen.

6. Filtergewebe nach einem der Ansprüche 1 bis 3, **dadurch gekennzeichnet, dass** die Verstärkungsfasern (3, 4) aus Aramid-Fasern gebildet sind.

7. Filtergewebe nach einem der Ansprüche 1 bis 6, **dadurch gekennzeichnet, dass** die Kett- und Schussfäden (1, 2) aus Polypropylenmonofilen gebildet sind.

8. Filtergewebe nach einem der Ansprüche 1 bis 7, **dadurch gekennzeichnet, dass** es 20 bis 40 Kettfäden (1) pro cm und 5 bis 16 Schussfäden (2) pro cm aufweist.

9. Filtergewebe nach einem der Ansprüche 1 bis 8, **dadurch gekennzeichnet, dass** es eine Köper 2/2-, Köper 3/1-, Köper 2/1-, Kreuzköper-, Atlas 5/1- oder Leinwandbindung aufweist.

10. Filtergewebe nach einem der Ansprüche 1 bis 9, **dadurch gekennzeichnet, dass** es randseitig mit einem Keder zur Befestigung in einem Halterahmen ausgebildet ist.

11. Filtergewebe nach einem der Ansprüche 1 bis 10, **dadurch gekennzeichnet, dass** es nach dem Weben und Einarbeiten der Verstärkungsfasern (3, 4) mittels Druck und Wärme kalandriert ist.

## Claims

1. Filter cloth for a brewery mash filter, formed from warp and weft threads (1, 2) on the basis of plastics material monofilaments having a diameter of 0.25 to 0.45 mm and further fibres (3, 4) incorporated at defined spacings in the warp and/or weft direction, wherein the further fibres (3, 4) are incorporated in the filter cloth parallel to the warp or weft threads (1, 2) as reinforcing fibres made of a plastics material that is more tear-resistant and less extensible than the plastics material monofilaments for the warp and weft threads (1, 2), **characterised in that** the reinforcing fibres (3, 4) have an elongation at break of a maximum of 6%.

2. Filter cloth according to claim 1, **characterised in that** the reinforcing fibres (3, 4) are incorporated in the filter cloth at equal spacings from one another.

3. Filter cloth according to either of claims 1 or 2 **characterised in that** the reinforcing fibres (3, 4) have a spacing of 1 to 10 cm, preferably 5 cm, from one another.

4. Filter cloth according to any one of claims 1 to 3, **characterised in that** the reinforcing fibres (3, 4) are produced from an ultra-high molecular weight polyethylene.

5. Filter cloth according to claim 4, **characterised in that** the reinforcing fibres (3, 4) have a fibre mass per unit length of 2500 to 3000 dtex, preferably 2800 to 2900 dtex.

6. Filter cloth according to any one of claims 1 to 3, **characterised in that** the reinforcing fibres (3, 4) are formed from aramid fibres.

7. Filter cloth according to any one of claims 1 to 6, **characterised in that** the warp and weft threads (1, 2) are formed from polypropylene monofilaments.

8. Filter cloth according to any one of claims 1 to 7, **characterised in that** it has 20 to 40 warp threads (1) per cm and 5 to 16 weft threads (2) per cm.

9. Filter cloth according to any one of claims 1 to 8, **characterised in that** it has a twill 2/2, twill 3/1, twill 2/1, cross-twill, atlas 5/1 or plain weave.

10. Filter cloth according to any one of claims 1 to 9 **characterised in that** it is configured at the edge with a welting for fastening in a holding frame.

11. Filter cloth according to any one of claims 1 to 10, **characterised in that** it is calendered by means of pressure and heat after the weaving and incorporation of the reinforcing fibres (3, 4).

## Revendications

1. Tissu filtrant pour un filtre à moût de brasserie, formé de fils de chaîne et de trame (1, 2) à base de monofils en matière plastique ayant un diamètre de 0,25 à 0,45 mm ainsi que d'autres fibres (3, 4) intégrées selon des intervalles définis dans le sens de chaîne et/ou de trame, lesdites autres fibres (3, 4) étant intégrées dans le tissu filtrant de manière parallèle aux fils de chaîne ou de trame (1, 2) en tant que fibres de renforcement constituées d'une matière plastique résistante à la rupture et à faible coefficient d'allongement par rapport aux monofils de matière plastique utilisés pour les fils de chaîne et de trame (1, 2), **caractérisé en ce que** les fibres de renforcement (3, 4) présentent un allongement à la rupture inférieur ou égal à 6 %.

2. Tissu filtrant selon la revendication 1, **caractérisé en ce que** les fibres de renforcement (3, 4) sont intégrées dans le tissu filtrant à des intervalles identiques les unes des autres.

3. Tissu filtrant selon l'une des revendications 1 ou 2, **caractérisé en ce que** les fibres de renforcement (3, 4) présentent un intervalle de 1 à 10 cm, de manière préférée 5 cm, les unes des autres.

4. Tissu filtrant selon l'une quelconque des revendications 1 à 3, **caractérisé en ce que** les fibres de renforcement (3, 4) sont fabriquées à partir d'un polyéthylène à poids moléculaire très élevé.

5. Tissu filtrant selon la revendication 4, **caractérisé en ce que** les fibres de renforcement (3, 4) présentent un grammage de 2 500 à 3 000 dtex, de manière préférée 2 800 à 2 900 dtex.

6. Tissu filtrant selon l'une quelconque des revendications 1 à 3, **caractérisé en ce que** les fibres de renforcement (3, 4) sont formées de fibres d'aramide.

7. Tissu filtrant selon l'une quelconque des revendications 1 à 6, **caractérisé en ce que** les fils de chaîne et de trame (1, 2) sont formés de monofils de polypropylène.

8. Tissu filtrant selon l'une quelconque des revendications 1 à 7, **caractérisé en ce qu'**il présente 20 à 40 fils de chaîne (1) par cm et 5 à 16 fils de trame (2) par cm.

9. Tissu filtrant selon l'une quelconque des revendications 1 à 8, **caractérisé en ce qu'**il présente une armure sergée 2/2, une armure sergée 3/1, une armure sergée 2/1, une armure sergée croisée, une armure satin 5/1 ou une armure toile.

10. Tissu filtrant selon l'une quelconque des revendications 1 à 9, **caractérisé en ce qu'**il est réalisé côté bord avec un bourrelet destiné à être fixé dans un châssis de retenue.

11. Tissu filtrant selon l'une quelconque des revendications 1 à 10, **caractérisé en ce qu'**il est calandré après le tissage et l'intégration des fibres de renforcement (3, 4) au moyen de pression et de chaleur.
